# EUROPEAN PATENT SPECIFICATION

(11) **EP 1 624 595 B1**
(45) Date of publication and mention of the grant of the patent: **18.04.2007**
(21) Application number: 05252506.0
(22) Date of filing: 21.04.2005
(51) Int. Cl.: H04B 10/155, H04J 14/02

(54) **Transmission of optical signals of different modulation formats in discrete wavelength bands**
Übertragung optischer Signale mit verschiedenen Modulationsformaten in diskreten Wellenlängenbändern
Transmission de signaux optiques à formats de modulation différents en bandes de longueur d'onde discrètes

(30) Priority: 06.08.2004 US 913915
(43) Date of publication of application: 08.02.2006
(73) Proprietor: Tyco Telecommunications (US) Inc., Morristown, NJ 07960 (US)
(72) Inventor: Liu, Li, Woolwich Township , NJ 08085 (US); Pilipetskii, Alexei N., Colts Neck, NJ 07722 (US); Anderson, William T., Red Bank, NJ 07701 (US); Cai, Jin-Xing, Morganville, NJ 07751 (US); Nissov, Morten, Ocean, NJ 07712 (US)
(74) Representative: Weitzel, David Stanley

(56) References cited:
- US-A- 5 825 949
- US-A- 5 896 211
- US-B1- 6 459 515
- XU C ET AL OPTICAL SOCIETY OF AMERICA / INSTITUTE OF ELECTRICAL AND ELECTRONICS ENGINEERS: "Comparison of return-to-zero phase shift keying and on-off keying in long haul dispersion managed transmissions" OPTICAL FIBER COMMUNICATION CONFERENCE. (OFC). POSTCONFERENCE DIGEST. ATLANTA, GA, MARCH 23 - 28, 2003, TRENDS IN OPTICS AND PHOTONICS SERIES. (TOPS), WASHINGTON, DC : OSA, US, vol. TOPS. VOL. 86, 23 March 2003 (2003-03-23), pages 453-454, XP010680287 ISBN: 1-55752-746-6
- HOSHIDA ET AL: "Optimal 40 Gb/s Modulation Formats for Spectrally Efficient Long-Haul DWDM Systems" JOURNAL OF LIGHTWAVE TECHNOLOGY, vol. 20, no. 12, December 2002 (2002-12), pages 1989-1996, XP011064560

## Description

### Technical Field

The present application relates to the optical transmission of information and, more particularly, to an apparatus for transmission of optical signals of different modulation formats in discrete bands.

### Background

Very long optical fiber transmission paths, such as those employed in undersea or transcontinental terrestrial lightwave transmission systems, which employ optical amplifier repeaters, are subject to decreased performance due to a host of impairments that accumulate along the length of the optical fiber in the transmission path. The source of these impairments within a single data channel includes amplified spontaneous emission (ASE) noise generated in the Erbium-Doped Fiber-Amplifiers (EDFAs), nonlinear effects caused by dependence of the single-mode fiber's index on the intensity of the light propagating through it, and chromatic dispersion which causes different optical frequencies to travel at different group velocities. In addition, for wavelength division multiplexed (WDM) systems, where several optical channels might be on the same fiber, crosstalk between channels caused by the fiber's nonlinear index should be considered.

Distortions of the received waveform are influenced by the shape of the transmitted pulses and the details of the design of the transmission line. Known long-haul systems have been implemented using On-Off-Keying (OOK), wherein the transmitted pulse is turned on and off with the ones and zeros of a data bit stream. On-Off-Keying may be implemented in a variety of well-known formats, such as Retum-to-Zero (RZ), Non-Return to Zero (NRZ) and Chirped-Retum-to-Zero (CRZ) formats. Generally, in a RZ format the transmitted optical pulses do not occupy the entire bit period and return to zero between adjacent bits, whereas in a NRZ format the optical pulses have a constant value characteristic when consecutive binary ones are sent. In a chirped format, such as CRZ, a bit synchronous sinusoidal phase modulation is imparted to the transmitted pulses.

Phase Shift Keying (PSK) is another modulation method known to those of ordinary skill in the art. In PSK modulation ones and zeros are identified by phase differences or transitions in the optical carrier. PSK may be implemented by turning the transmitter on with a first phase to indicate a one and then with a second phase to indicate a zero. In a differential phase-shiftkeying (DPSK) format, the optical intensity of the signal may be held constant, while ones and zeros are indicated by differential phase transitions. DPSK modulation formats include RZ-DPSK, wherein a return-to-zero amplitude modulation is imparted to a DPSK signal, and CRZ-DPSK.

It has been recognized that DPSK can provide advantages over OOK. For example, compared to OOK, RZ-DPSK modulation provides a potential 3dB reduction in the required optical signal-to-noise (OSNR) for a particular bit error rate (BER) when using a balanced receiver and reducing cross-phase modulation (XPM) penalties. When upgrading existing systems, therefore, it may be desirable to add new optical channels using a DPSK format, while leaving existing OOK modulated channels in place to minimize cost. It has been found, however, that interleaving of DPSK and OOK formatted channels results in DPSK system performance that is worse than a pure DPSK formatted system. That is, OOK channels cause larger cross-phase modulation penalty for its neighbors than DPSK channels. A simulation also shows that the OOK surrounded by DPSK performs better than pure OOK at a channel spacing of 25 GHz. For wide channel spacing no additional benefit is observed for OOK channels. In short, DPSK channels are more sensitive to cross-base modulation effects, and OOK prefers DPSK as its neighbors.

There is therefore a need for a system and method for transmitting optical signals of different modulation formats in an optical transmission system.

According to the invention there is provided an apparatus for transmitting an optical signal comprising: a plurality of first modulation format transmitters, each of said first modulation format transmitters being configured to provide an optical signal at a different associated wavelength and having data modulated thereon according to a first modulation format; and a plurality of second modulation format transmitters, each of said second modulation format transmitters being configured to provide an optical signal at a different associated wavelength and having data modulated thereon according to a second modulation format different from said first modulation format; a WDM multiplexer configured to multiplex each of said signals having said first and second modulation formats into an aggregate signal, each of said signals having said first modulation format being grouped in a first wavelength band and each of said signals having said second modulation format being grouped in a second wavelength band, said first and second wavelength bands being separated by a predetermined band separation.

### Brief Description of the Drawings

Reference should be made to the following detailed description which should be read in conjunction with the following figures, wherein like numerals represent like parts:
FIG. 1 is a simplified block diagram of one exemplary embodiment of a system consistent with the invention;
FIG. 2A is a plot of transmitted relative intensity vs. frequency associated with an exemplary embodiment of optical signals transmitted in a manner consistent with the present invention;
FIG. 2B is a plot if received relative intensity vs. frequency associated with the transmitted signals illustrated in FIG. 2A;
FIG. 3 shows plots of Q vs. optical signal to noise ratio for a DPSK channel which is closest to the OOK band, associated with groups of channels far from the zero dispersion wavelength and transmitted in a manner consistent with the invention showing the results for different separations between the distinct bands wherein the channel spacing within each distinct band is 25 GHz;
FIG. 4 shows plots of Q vs. optical signal to noise ratio for a DPSK channel which is closest to the OOK band, associated with groups of channels near the zero dispersion wavelength and transmitted in a manner consistent with the invention showing the results for different separations between the distinct bands wherein the channel spacing within each distinct band is 25 GHz;
FIG. 5 shows plots of Q penalty vs. band separation associated with different wavelengths/channels transmitted in a manner consistent with the invention wherein the channel spacing within each distinct band is 25 GHz;
FIG. 6A is a plot of transmitted relative intensity vs. frequency associated with another exemplary embodiment of optical signals transmitted in a manner consistent with the present invention;
FIG. 6B is a plot of received relative intensity vs. frequency associated with the transmitted signals illustrated in FIG. 6A;
FIG. 7 shows plots of Q vs. optical signal to noise ratio for a DPSK channel which is closest to the OOK band, associated with groups of channels far from the zero dispersion wavelength and transmitted in a manner consistent with the invention showing the results for different separations between the distinct bands wherein the channel spacing within each distinct band is 33 GHz;
FIG. 8 shows plots of Q vs. optical signal to noise ratio for a DPSK channel which is closest to the OOK band, associated with groups of channels near the zero dispersion wavelength and transmitted in a manner consistent with the invention showing the results for different separations between the distinct bands wherein the channel spacing within each distinct band is 33 GHz; and
FIG. 9 shows plots of Q penalty vs. band separation associated with different wavelengths/channels transmitted in a manner consistent with the invention wherein the channel spacing within each distinct band is 33 GHz.

### Detailed Description

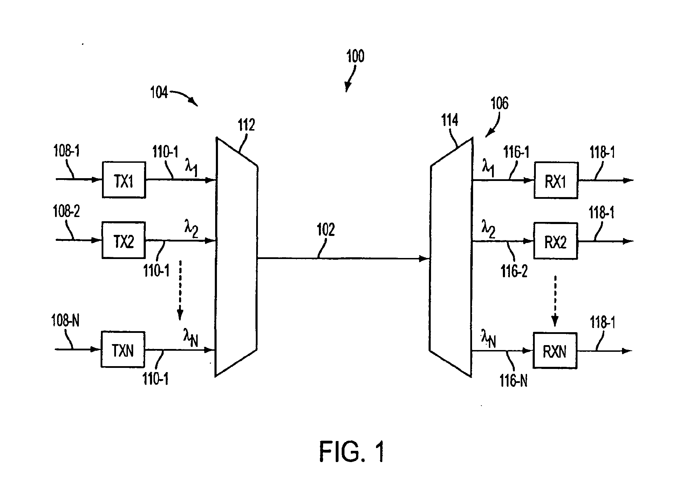

FIG. 1 is a simplified block diagram of one exemplary embodiment of a WDM transmission system 100 consistent with the present invention. The transmission system serves to transmit a plurality of optical channels over an optical information channel 102 from a transmitting terminal 104 to one or more remotely located receiving terminals 106. Those skilled in the art will recognize that the system 100 has been depicted as a highly simplified point-to-point system form for ease of explanation. For example, the transmitting terminal 104 and receiving terminal 106 may, of course, both be configured as transceivers, whereby each may be configured to perform both transmitting and receiving functions. For ease of explanation, however, the terminals are depicted and described herein with respect to only a transmitting or receiving function. It is to be understood that a system and method consistent with the invention may be incorporated into a wide variety of network components and configurations. The illustrated exemplary embodiments herein are provided only by way of explanation, not of limitation.

In the illustrated exemplary embodiment, each of plurality of transmitters TX1, TX2 ... TXN receives a data signal on an associated input port 108-1, 108-2 ... 108-N, and transmits the data signal on associated wavelength λ₁, λ₂ ... λ_{N}. The transmitters, of course, are shown in highly simplified form for ease of explanation. Those skilled in the art will recognize that each transmitter may include electrical and optical components configured for transmitting the data signal at its associated wavelength with a desired amplitude and modulation.

Consistent with the present invention, one or more of the transmitters TX1, TX2 ... TXN may be configured to modulate data on the associated wavelength with a first modulation format, while one or more of the other transmitters TX1, TX2 ... TXN may be configured to modulate data on associated wavelengths with a second modulation format different from the first modulation format. This configuration may be useful, for example, in system upgrade configurations, wherein new channels are added with a modulation format different from the previously installed channels.

Those of ordinary skill in the art will recognize that an optical wave of a certain center frequency in a single mode fiber has three parameters which can continuously vary with time: amplitude, phase (frequency), and state of polarization. What is meant by "modulation format" is that one of these attributes, or a coupled combination of these, is made to vary in accordance with the information/data being imparted to that optical wave. The other parameters may not be constrained to follow the information signal.

Two modulation formats are "different" as used herein if the coupled combination of optical wave parameters (which can refer to a single parameter being varied) are different. Two modulation formats are also different if the coupled combination of optical wave parameters is the same, but one format includes an optical wave parameter that continuously varies in accordance with another signal, e.g. a clock signal or a periodic drive signal, in a manner different from the variation of the same parameter in the other format. Consistent with this definition, well-known modulation formats such as NRZ, RZ, CRZ, FSK, PSK, DPSK, RZ-DPSK and CRZ-DPSK are different from each other. U.S. Patent No. 6,556,326 (the '326 patent) to Neal S. Bergano, describes the combination of a known modulation format with a synchronous amplitude modulation. The synchronous amplitude modulation described in the '326 patent may be applied at a selected depth of modulation. Two modulation formats consistent with the'326 patent but having different amplitude modulation depths are "different" as used herein.

The transmitted wavelengths or channels are respectively carried on a plurality of paths 110-1, 110-2... 110-N. The data channels are combined into an aggregate signal on optical information channel 102 by a multiplexer or combiner 112. The optical information channel 102 may include optical fiber waveguides, optical amplifiers, optical filters, dispersion compensating modules, and other active and passive components.

The aggregate signal may be received at one or more remote receiving terminals 106. A demultiplexer 114 separates the transmitted channels at wavelengths λ₁, λ₂. .. λ_{N} onto associated paths 116-1, 116-2...116-N coupled to associated receivers RX1, RX2...RXN. Depending on system requirements, the receivers may recreate the data signals from the received channels and provide the data signals on associated output paths 118-1, 118-2, 118-3, 118-N.

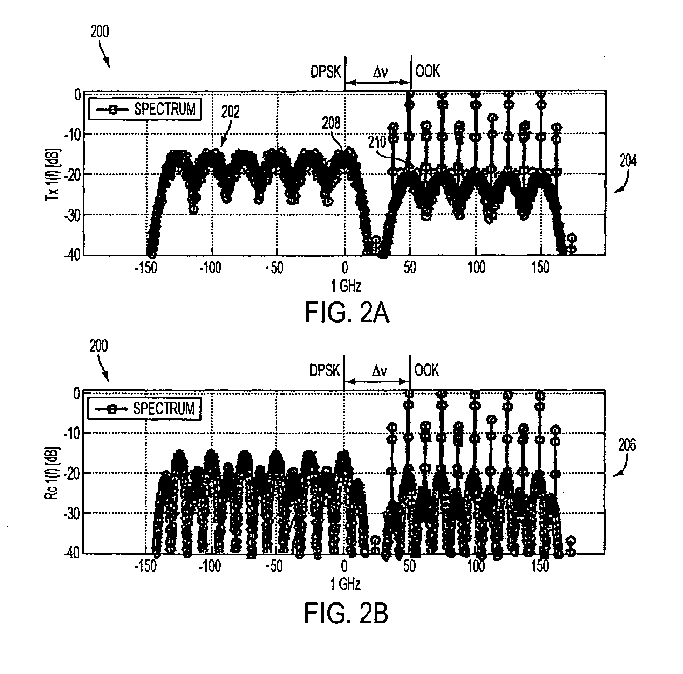

Consistent with the present invention, channels having a common modulation format may be grouped in distinct frequency/wavelength bands. FIG. 2A is a plot 200 of transmitted relative intensity vs. frequency associated with one exemplary embodiment of the invention wherein a band 202 of DPSK signals is separated from a band 204 of OOK signals. FIG. 2B is a plot 206 of received relative intensity vs. frequency associated with the transmitted signals illustrated in FIG. 2A. Although the illustrated embodiment includes two bands of channels having specific modulation formats, e.g. DPSK and OOK, it is to be understood that the present invention is not limited to these two modulation formats or to any number of distinct bands or modulation formats. The illustrated exemplary embodiments are thus provided by way of illustration, and are not intended to be limiting.

The illustrated exemplary plots are associated with a transmission simulation over a distance of 8300 km, bit rate of 12.4 Gb/s, random shifted pseudo random bit sequence (PRBS) data representation, and a 3dB optical filter bandwidth of 20 GHz. The distinct DPSK 202and OOK 204 channel bands were separated by a band separation of Δν. The band separation Δν is defined as the spacing between the two closest channels 208, 210 from distinct bands 202, 204, respectively. In the embodiment illustrated in FIGS. 2A and 2B, the channel spacing within each of the distinct bands 202, 204 is 25GHz.

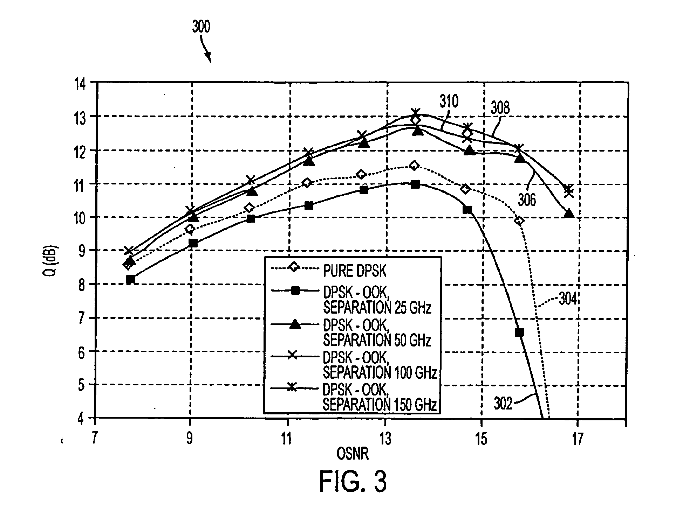

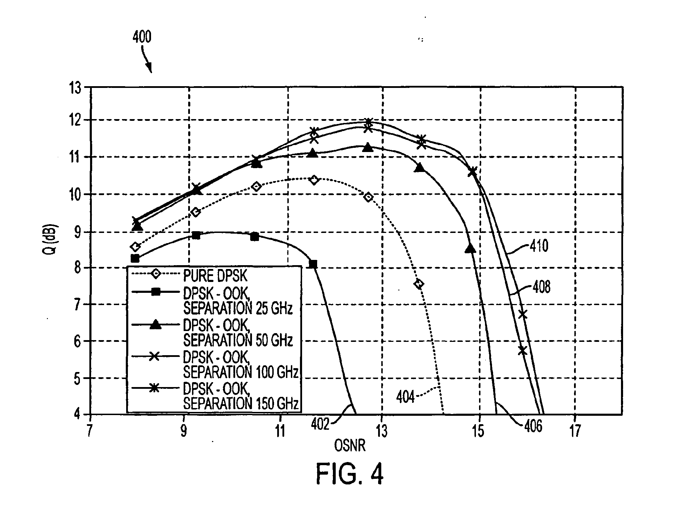

FIGS. 3 and 4 include plots 300, 400, respectively, of Q vs. optical signal to noise ratio for the DPSK channel 208 which is closest to the OOK band, and associated with the transmitted and received signals shown in FIGS. 2A and 2B, showing the results for four different band separations Δν. The OSNR was varied by varying the signal power. The Q of pure DPSK 304, i.e. all channels are DPSK formatted and evenly distributed, is also plotted. FIG. 3 shows the results of a DPSK channel 208 (1543.68nm, where dispersion is about -4400 ps/nm) in a band far from the zero dispersion wavelength. FIG. 4 shows the results of a channel (1550.27nm, where dispersion is about -73 ps/nm) in a band near the zero dispersion wavelength.

As indicated by plots 302 and 402, when the band separation Δν in the illustrated exemplary embodiment is the same as the channel spacing, i.e. 25 GHz, the performance of the DPSK channel 208 associated with distinct bands of DPSK and OOK consistent with the invention is worse than the performance of the pure DPSK shown in plots 304, 404, respectively. For the channel far from the zero dispersion wavelength, plot 302, the difference is not as profound as for the channel near the zero dispersion wavelength, plot 402. When the band separation Δν is increased to about twice the channel spacing (50GHz) or more, as shown in plots 306, 308, 310 and 406, 408, 410, the performance of DPSK channel 208 associated with distinct bands of DPSK and OOK consistent with the invention is improved compared to the pure DPSK shown in plots 304, 404.

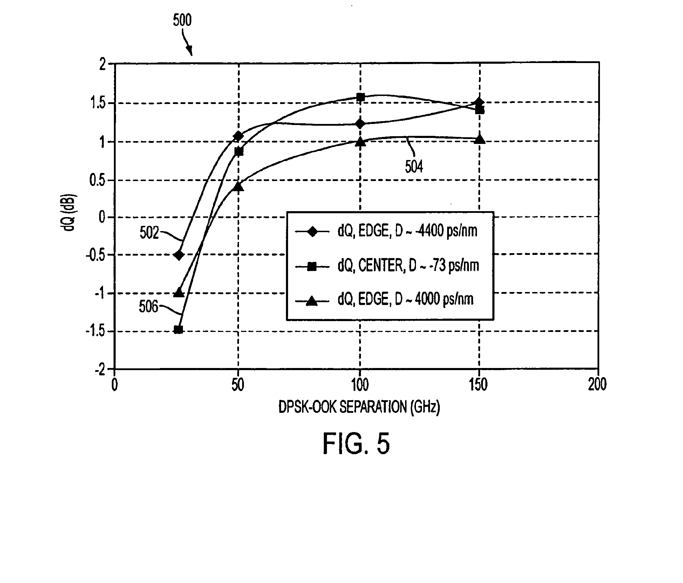

FIG. 5 includes plots 500 of Q penalty (dQ) vs. band separation (Δν) associated with three different wavelengths of the signals shown in FIGS. 2A and 2B. The Q penalty is defined as the difference between the maximum Q of the DPSK channel 208 wherein the DPSK and OOK transmitted in distinct bands in a manner consistent with the invention and the maximum Q of pure DPSK wherein all channels are evenly distributed with a channel spacing of 25 GHz. The maximum Q can be found from the curve of Q vs. OSNR as depicted in Fig 3 and 4. A positive dQ indicates improved performance compared to the performance of pure DPSK. Plots 502 and 504 are associated with opposite edge channels far from the zero dispersion wavelength where the dispersion is about -4400 ps/nm and about 4000 ps/nm, respectively. Plot 506 is associated with a channel near the zero dispersion wavelength where the dispersion is about -73 ps/nm. As indicated by plots 502-506, each channel exhibits improved performance compared to pure DPSK at band separations greater than about 40 GHz.

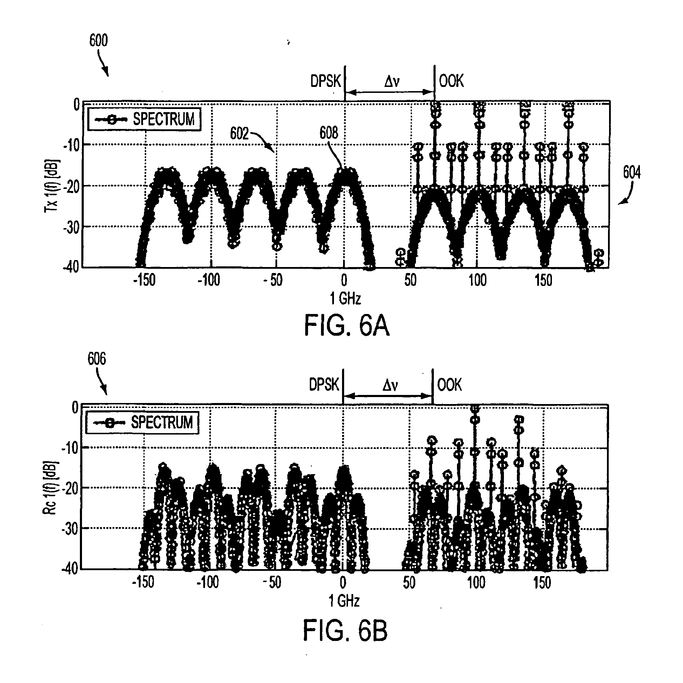

FIGS. 6A and 6B are plots of transmitted 600 and received 606 relative intensity vs. frequency associated with another exemplary embodiment of the invention wherein a band 602 of DPSK signals is separated from a band 604 of OOK signals. The plots in FIGS. 6A and 6B are associated with the same transmission experiment setup as described above in connection with FIGS. 2A and 2B, except that in FIGS. 6A and 6B the channel spacing within each of the distinct bands 602, 604 was 33 GHz.

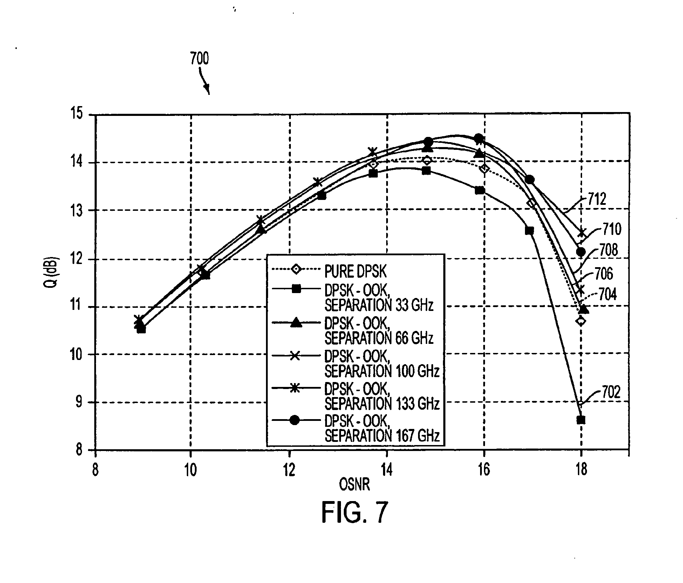

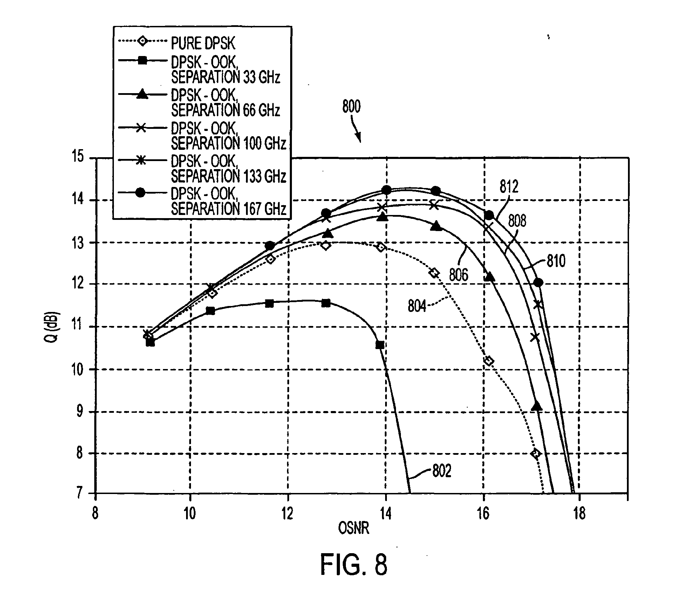

FIGS. 7 and 8 include plots 700, 800, respectively, of Q vs. optical signal to noise ratio for the DPSK channel 608 which is closest to the OOK band, and associated with the transmitted and received signals shown in FIGS. 6A and 6B showing the results for five different band separations Δν. The Q of pure DPSK, i.e. all channels DPSK formatted and evenly distributed, is also plotted. FIG. 7 shows the results of a DPSK channel 608 (1543.62nm, where dispersion is about -4400 ps/nm) in a band far from the zero dispersion wavelength. FIG. 8 shows the results of a channel (1550.27nm, where dispersion is about -73 ps/nm) in a band near the zero dispersion wavelength.

As indicated by plots 702 and 802, when the band separation Δν in the illustrated exemplary embodiment is the same as the channel spacing, i.e. 33 GHz, the performance of the DPSK channel 608 associated with distinct bands of DPSK and OOK consistent with the invention is worse than the performance of the pure DPSK shown in plots 704, 804, respectively. For the channel far from the zero dispersion wavelength, plot 702, the difference is not as profound as for the channel near the zero dispersion wavelength, plot 802. When the band separation Δν is increased to about twice the channel spacing (66 GHz) or more, as shown in plots 706, 708, 710, 712 and 806, 808, 810, 812, the performance of DPSK channel 208 associated with distinct bands of DPSK and OOK consistent with the invention is improved compared to the pure DPSK shown in plots 704, 804.

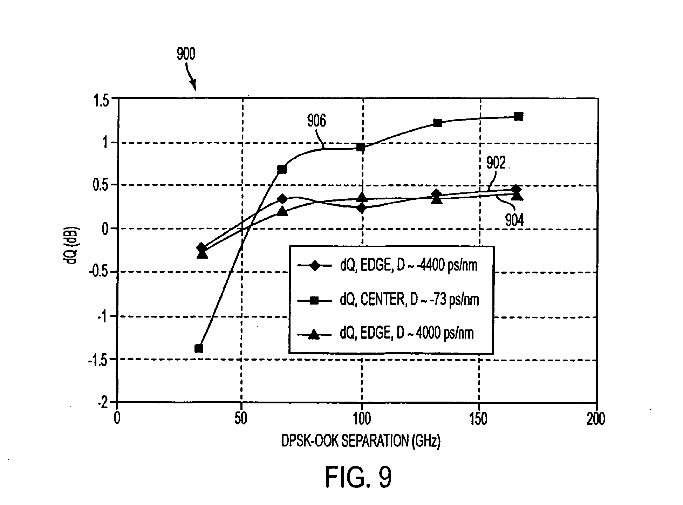

FIG. 9 includes plots 900 of Q penalty (dQ) vs. band separation (Δν) associated with three different wavelengths of the signals shown in FIGS. 6A and 6B. The Q penalty in FIG. 9 is defined as the difference between the maximum Q of the DPSK channel 608 wherein the DPSK and OOK transmitted in distinct bands in a manner consistent with the invention and the maximum Q of pure DPSK wherein all channels are evenly distributed with a channel spacing of 33 GHz. The maximum Q can be found from the curve of Q vs. OSNR as depicted in Fig 3 and 4. Plots 902 and 904 are associated with opposite edge channels far from the zero dispersion wavelength of a system where the dispersion is about -4400 ps/nm and about 4000 ps/nm, respectively. Plot 906 is associated with a channel near the zero dispersion wavelength where the dispersion is about -73 ps/nm. As indicated by plots 902-906, each channel exhibits improved performance compared to pure DPSK at band separations greater than about 55 GHz.

There is thus provided a system and method for transmitting optical signals of different modulation formats in distinct bands. In the illustrated exemplary embodiments, performance is not degraded compared to pure DPSK when the separation between bands is about twice the channel spacing. Systems may be implemented to achieve this band separation by turning off only one channel in the system. Narrower or wider band spacing may be implemented depending on the system configuration and requirements.

The embodiments that have been described herein but some of the several which utilize this invention and are set forth here by way of illustration but not of limitation. Many other embodiments, which will be readily apparent to those skilled in the art, may be made without departing materially from the scope of the invention.

## Claims

1. An apparatus (104) for transmitting an optical signal comprising:
a plurality of first modulation format transmitters, each of said first modulation format transmitters being configured to provide an optical signal at a different associated wavelength and having data modulated thereon according to a first modulation format; and
a plurality of second modulation format transmitters, each of said second modulation format transmitters being configured to provide an optical signal at a different associated wavelength and having data modulated thereon according to a second modulation format different from said first modulation format;
a WDM multiplexer (112) configured to multiplex each of said signals having said first and second modulation formats into an aggregate signal,
each of said signals having said first modulation format being grouped in a first wavelength band and each of said signals having said second modulation format being grouped in a second wavelength band, said first and second wavelength bands being separated by a predetermined band separation.

2. An apparatus according to claim 1, wherein each of said signals in said first wavelength band and each of said signals in said second wavelength band are separated by a predetermined channel spacing.

3. An apparatus according to claim 2, wherein said predetermined channel spacing is 25GHz.

4. An apparatus according to claim 2, wherein said predetermined channel spacing is 33 GHz.

5. An apparatus according to any one of claims 1 to 4, wherein said predetermined band separation is greater than said predetermined channel spacing.

6. An apparatus according to any one of claims 2 to 5, wherein said predetermined band separation is about two times said predetermined channel spacing.

7. An apparatus according to any one of the preceding claims, wherein said predetermined band separation is 50 GHz.

8. An apparatus according to any one of the preceding claims, wherein said predetermined band separation is 66 GHz.

9. An apparatus according to any one of the preceding claims, wherein said first modulation format is an OOK format.

10. An apparatus according to any one of the preceding claims, wherein said second modulation format is a DPSK format.

11. An apparatus according to any one of the preceding claims, wherein said first modulation format is an OOK format and said second modulation format is a DPSK format.

12. An apparatus according to claim 1, said apparatus comprising a plurality of said second modulation format transmitters.

## Patentansprüche

1. Vorrichtung (104) zur Übertragung eines optischen Signals, aufweisend:
eine Mehrzahl an ersten Modulationsformattransmittern, wobei jeder der ersten Modulationsformattransmitter konfiguriert ist, um bereitzustellen ein optisches Signal bei einer unterschiedlichen assoziierten Wellenlänge und Daten aufweist, die darauf moduliert sind gemäß eines ersten Modulationsformates; und
eine Mehrzahl an zweiten Modulationsformattransmittern, wobei jeder der zweiten Modulationsformattransmitter konfiguriert ist, um bereitzustellen ein optisches Signal bei einer unterschiedlichen assoziierten Wellenlänge und Daten aufweist, die darauf moduliert sind gemäß eines zweiten Modulationsformates, das unterschiedlich ist zum ersten Modulationsformat;
einen ersten WDM-Multiplexer (112), der konfiguriert ist, um jedes der Signale mit den ersten und zweiten Modulationsformaten in ein Aggregatsignal zu multiplexen,
wobei jedes der Signale aufweist das erste Modulationsformat, das gruppiert ist in einem ersten Wellenlängenband, und jedes der besagten Signale aufweist das zweite Modulationsformat, das gruppiert ist in einem zweiten Wellenlängenband, wobei die ersten und zweiten Wellenlängenbänder separiert sind mittels einer vorbestimmten Bandseparierung.

2. Vorrichtung nach Anspruch 1, wobei jedes der Signale im ersten Wellenlängenband und jedes der Signale im zweiten Wellenlängenband separiert sind mittels eines vorbestimmten Kanalabstandes.

3. Vorrichtung nach Anspruch 2, wobei der vorbestimmte Kanalabstand 25 GHz beträgt.

4. Vorrichtung nach Anspruch 2, wobei der vorbestimmte Kanalabstand 33 GHz beträgt.

5. Vorrichtung nach einem der Ansprüche 1 bis 4, wobei die vorbestimmte Bandseparierung größer ist als der vorbestimmte Kanalabstand.

6. Vorrichtung nach einem der Ansprüche 2 bis 5, wobei die vorbestimmte Bandseparierung ungefähr zweimal dem vorbestimmten Kanalabstand entspricht.

7. Vorrichtung nach einem der vorhergehenden Ansprüche, wobei die vorbestimmte Bandseparierung 50 GHz beträgt.

8. Vorrichtung nach einem der vorhergehenden Ansprüche, wobei die vorbestimmte Bandseparierung 66 GHz beträgt.

9. Vorrichtung nach einem der vorhergehenden Ansprüche, wobei das erste Modulationsformat ein OOK-Format ist.

10. Vorrichtung nach einem der vorhergehenden Ansprüche, wobei das zweite Modulationsformat ein DPSK-Format ist.

11. Vorrichtung nach einem der vorhergehenden Ansprüche, wobei das erste Modulationsformat ein OOK-Format und das zweite Modulationsformat ein DPSK-Format ist.

12. Vorrichtung nach Anspruch 1, wobei die Vorrichtung aufweist eine Mehrzahl an den zweiten Modulationsformattransmittern.

## Revendications

1. Dispositif (104) pour émettre un signal optique, comprenant :
une pluralité d'émetteurs à premier format de modulation, chacun des émetteurs à premier format de modulation étant configuré pour fournir un signal optique à une longueur d'onde associée différente et sur lesquels sont modulées des données conformément à un premier format de modulation ; et
une pluralité d'émetteurs à deuxième format de modulation, chacun des émetteurs à deuxième format de modulation étant configuré pour fournir un signal optique à une longueur d'onde associée différente et sur lesquels sont modulées des données conformément à un deuxième format de modulation différent du premier format de modulation ;
un multiplexeur (112) WDM (Multiplexage par Répartition en Longueur d'Onde) configuré pour multiplexer chacun des signaux ayant les premier et deuxième formats de modulation en un signal agrégé,
chacun des signaux ayant le premier format de modulation étant regroupé dans une première bande de longueurs d'onde et chacun des signaux ayant le deuxième format de modulation étant regroupé dans une deuxième bande de longueurs d'onde, les première et deuxième bandes de longueurs d'onde étant séparées d'une séparation de bande déterminée à l'avance.

2. Dispositif suivant la revendication 1, dans lequel chacun des signaux dans la première bande de longueurs d'onde et chacun des signaux dans la deuxième bande de longueurs d'onde sont séparés d'un espacement de canal déterminé à l'avance.

3. Dispositif suivant la revendication 2, dans lequel l'espacement de canal déterminé à l'avance est de 25 GHz.

4. Dispositif suivant la revendication 2, dans lequel l'espacement de canal déterminé à l'avance est de 33 GHz.

5. Dispositif suivant l'une quelconque des revendications 1 à 4, dans lequel la séparation de bande déterminée à l'avance est supérieure à l'espacement de canal déterminé à l'avance.

6. Dispositif suivant l'une quelconque des revendications 2 à 5, dans lequel la séparation de bande déterminée à l'avance est environ deux fois supérieure à l'espacement de canal déterminé à l'avance.

7. Dispositif suivant l'une quelconque des revendications précédentes, dans lequel la séparation de bande déterminée à l'avance est de 50 GHz.

8. Dispositif suivant l'une quelconque des revendications précédentes, dans lequel la séparation de bande déterminée à l'avance est de 66 GHz.

9. Dispositif suivant l'une quelconque des revendications précédentes, dans lequel le premier format de modulation est un format OOK (Modulation en Tout ou Rien).

10. Dispositif suivant l'une quelconque des revendications précédentes, dans lequel le deuxième format de modulation est un format DPSK (Modulation par Déplacement de Phase Numérique).

11. Dispositif suivant l'une quelconque des revendications précédentes, dans lequel le premier format de modulation est un format OOK et le deuxième format de modulation est un format DPSK.

12. Dispositif suivant la revendication 1, le dispositif comprenant une pluralité des émetteurs à deuxième format de modulation.
